# FASCICULE DE BREVET EUROPEEN

(11) **EP 2 373 476 B1**
(45) Date de publication et mention de la délivrance du brevet: **16.01.2013**
(21) Numéro de dépôt: 09771300.2
(22) Date de dépôt: 30.11.2009
(51) Int. Cl.: B29C 73/22, B60C 1/00, B60C 19/12

(54) **OBJET PNEUMATIQUE POURVU D'UNE COUCHE AUTO-OBTURANTE ET ETANCHE AUX GAZ, A BASE D'ELASTOMERE THERMOPLASTIQUE ET D'UNE HUILE D'EXTENSION**
PNEUMATISCHES OBJEKT, DAS MIT EINER SELBSTTÄTIG ABDICHTENDEN UND GASDICHTEN SCHICHT AUF BASIS EINES THERMOPLASTISCHEN ELASTOMERS UND VON STRECKÖL VERSEHEN IST
PNEUMATIC OBJECT PROVIDED WITH A SELF-SEALING AND GAS-TIGHT LAYER COMPRISING A THERMOPLASTIC ELASTOMER AND EXTENSION OIL

(30) Priorité: 03.12.2008 FR 0858239
(43) Date de publication de la demande: 12.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LESAGE, Pierre, F-63000 Clermont-ferrand (FR); MERINO LOPEZ, José, F-63200 Riom (FR)
(74) Mandataire: Ribière, Joel
(86) Numéro de dépôt international: PCT/EP2009/008501
(87) Numéro de publication internationale: WO 2010/063425

(56) Documents cités:
- WO-A-2008/080557
- US-A- 6 079 465
- US-A1- 2006 229 402

## Description

La présente invention est relative aux objets "pneumatiques", c'est-à-dire, par définition, aux objets qui prennent leur forme utilisable quand on les gonfle d'air ou d'un gaz de gonflage équivalent.

Plus particulièrement, elle se rapporte d'une part aux compositions auto-obturantes utilisées comme couches anti-crevaison dans ces objets pneumatiques, en particulier dans des bandages pneumatiques, d'autre part aux compositions ou couches étanches aux gaz assurant l'étanchéité dans de tels objets pneumatiques.

Les compositions auto-obturantes *("self-sealing")* utilisables comme couches anti-crevaison dans des bandages pneumatiques sont bien connues. Par définition aptes à assurer automatiquement, c'est-à-dire sans aucune intervention externe, l'étanchéité d'un bandage pneumatique en cas de perforation de ce dernier par un corps étranger tel qu'un clou, ces compositions sont particulièrement difficiles à mettre au point. Les couches auto-obturantes doivent en effet satisfaire à de nombreuses conditions de nature physique et chimique, être efficaces dans une très large gamme de températures d'utilisation et ce pendant toute la durée de vie des bandages pneumatiques. Elles doivent être capables d'obturer le trou lorsque l'objet perforant reste en place ; à l'expulsion de ce dernier, elles doivent pouvoir combler le trou et rendre le bandage étanche, notamment dans des conditions hivernales. Les compositions auto-obturantes qui ont été utilisées jusqu'ici dans les bandages pneumatiques sont essentiellement à base de caoutchouc butyl (copolymère d'isobutylène et d'isoprène).

On rappellera d'autre part que dans un bandage pneumatique conventionnel du type "tubeless" (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse de la diffusion d'air provenant de l'espace intérieur au bandage. Cette fonction de couche interne ou "gomme intérieure" (*"inner liner"*) étanche est aujourd'hui remplie par des compositions qui sont elles aussi à base de caoutchouc butyl, reconnues depuis fort longtemps pour leurs excellentes propriétés d'étanchéité.

Or, un inconvénient bien connu des compositions à base de caoutchouc butyl est qu'elles présentent des pertes hystérétiques importantes, qui plus est sur un spectre large de température, inconvénient qui pénalise la résistance au roulement des bandages pneumatiques.

Diminuer à la fois l'hystérèse des couches internes d'étanchéité et celles des couches auto-obturantes, dans les bandages pneumatiques, et donc in fine la consommation de carburant des véhicules automobiles, est un objectif constant des concepteurs de bandages pneumatiques auquel se heurte le plus souvent la technologie actuelle.

La demande de brevet WO 2008/080557 a proposé l'utilisation dans un bandage pneumatique, selon le préambule de la revendication 1, d'une couche auto-obturante totalement dépourvue de caoutchouc butyl, et répondant donc déjà en partie à l'objectif ci-dessus de réduction d'hystérèse. Cette couche auto-obturante a pour caractéristique de comporter, à titre d'élastomère majoritaire, un élastomère thermoplastique styrénique et une huile d'extension à un taux particulièrement élevé, compris entre 200 et 700 pce, ledit élastomère TPS étant particulièrement choisi dans le groupe constitué par les copolymères SEBS, les copolymères SEPS et les mélanges de ces copolymères.

Dans cette demande, la couche auto-obturante ci-dessus est associée à une deuxième couche étanche aux gaz pour former un stratifié bicouche étanche à l'air et anti-crevaison particulièrement efficace. Toutefois, la couche étanche aux gaz reste à base de caoutchouc butyl, donc relativement hystérétique.

Or, poursuivant leurs recherches, les Demanderesses ont découvert qu'une seule couche à base d'un élastomère thermoplastique spécifique, ne nécessitant pas la présence de caoutchouc butyl, permet de manière inattendue de remplir efficacement les deux fonctions ci-dessus d'auto-obturation d'une part, d'étanchéité vis-à-vis des gaz de gonflage d'autre part.

Ainsi, selon un premier objet, la présente invention concerne un objet pneumatique pourvu d'une couche élastomère auto-obturante et étanche aux gaz de gonflage, caractérisé en ce que ladite couche élastomère comporte au moins, à titre d'élastomère majoritaire, un copolymère thermoplastique à blocs polystyrène et polyisobutylène, et au moins 100 pce d'une huile d'extension.

L'invention concerne particulièrement les objets pneumatiques en caoutchouc tels que des bandages pneumatiques, ou les chambres à air, notamment les chambres à air pour bandage pneumatique selon la revendication 1.

L'invention concerne plus particulièrement les bandages pneumatiques destinés à équiper des véhicules à moteur de type tourisme, SUV (*"Sport Utility Vehicles"*)*,* deux roues (notamment motos), avions, comme des véhicules industriels tels que camionnettes, poids-lourd (c'est-à-dire métro, bus, engins de transport routier tels que camions, tracteurs, remorques, véhicules hors-la-route tels qu'engins agricoles ou de génie civil) et autres véhicules de transport ou de manutention.

L'invention concerne également l'utilisation comme couche auto-obturante et étanche aux gaz de gonflage, dans un objet pneumatique, d'un copolymère thermoplastique à blocs polystyrène et polyisobutylène et d'au moins 100 pce d'une huile d'extension selon la revendication 15.

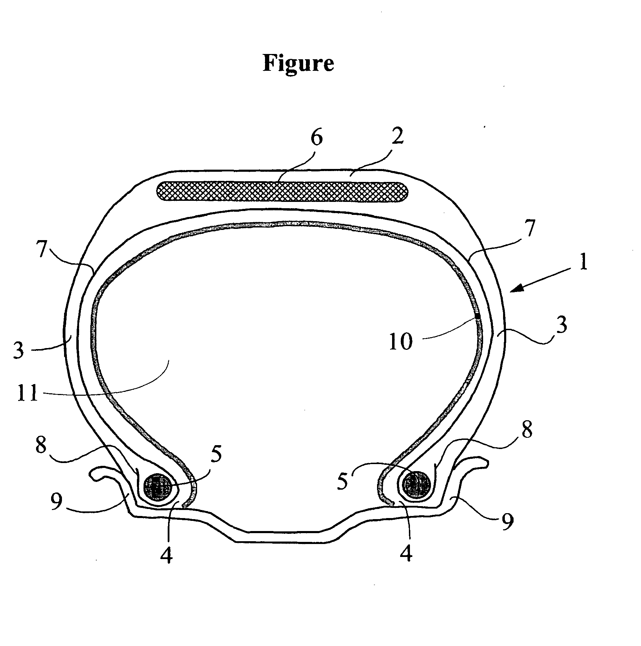

L'invention ainsi que ses avantages seront aisément compris à la lumière de la description et des exemples de réalisation qui suivent, ainsi que de la figure unique relative à ces exemples qui schématise, en coupe radiale, un bandage pneumatique conforme à l'invention.

### I. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I-1. Couche élastomère étanche aux gaz et auto-obturante

L'objet pneumatique de l'invention a pour caractéristique essentielle d'être pourvu d'une couche auto-obturante et étanche aux gaz de gonflage formée d'une composition élastomère (ou "caoutchouc", les deux étant considérés de manière connue comme synonymes) du type thermoplastique, ladite couche ou composition comportant au moins, à titre d'élastomère majoritaire, un copolymère thermoplastique à blocs polystyrène et polyisobutylène, et une huile d'extension à un taux pondéral d'au moins 100 pce. Ces composants sont décrits en détail ci-après.

### I-1-A. Copolymère à blocs polystyrène et polyisobutylène

On rappellera tout d'abord que les élastomères thermoplastiques styréniques (en abrégé dénommés "TPS") sont des élastomères thermoplastiques se présentant sous la forme de copolymères blocs à base de styrène. De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

Ceci étant rappelé, par "copolymère à blocs polystyrène et polyisobutylène" doit être entendu dans la présente demande tout copolymère thermoplastique styrénique comportant au moins un bloc polystyrène (c'est-à-dire un ou plusieurs blocs polystyrène) et au moins un bloc polyisobutylène (c'est-à-dire un ou plusieurs blocs polyisobutylène), auxquels peuvent être associés ou non d'autres blocs saturés ou non (par exemple polyéthylène et/ou polypropylène) et/ou d'autres unités monomères (par exemple des unités insaturées telles que diéniques).

Ce copolymère spécifique à blocs polystyrène et polyisobutylène, dénommé également "copolymère TPS" dans la présente demande, est en particulier choisi dans le groupe constitué par les copolymères dibloc styrène/ isobutylène (en abrégé "SIB"), les copolymères tribloc styrène/ isobutylène/ styrène (en abrégé "SIBS") et les mélanges de ces copolymères SBIB et SIBS, par définition totalement saturés. L'invention s'applique également aux cas où le bloc polyisobutylène, dans les copolymères ci-dessus, peut être interrompu par une ou plusieurs unités insaturées, en particulier une ou plusieurs unités diéniques telles qu'isopréniques, éventuellement halogénées.

On a constaté que l'utilisation de ce copolymère TPS, en particulier SIB ou SIBS, offre à la couche auto-obturante et étanche aux gaz d'excellentes propriétés d'étanchéité tout en réduisant de manière notable l'hystérèse comparativement à des couches conventionnelles à base de caoutchouc butyl.

Selon un mode de réalisation préférentiel de l'invention, le taux pondéral de styrène, dans le copolymère TPS, est compris entre 5% et 50%. En dessous du minimum indiqué, le caractère thermoplastique de l'élastomère risque de diminuer de manière sensible tandis qu'au-dessus du maximum préconisé, l'élasticité de la couche étanche peut être affectée. Pour ces raisons, le taux de styrène est plus préférentiellement compris entre 10% et 40%, en particulier entre 15 et 35%. Par styrène, doit être entendu dans la présente description tout monomère à base de styrène, qu'il soit non substitué comme substitué ; parmi les styrènes substitués peuvent être cités par exemple les méthylstyrènes (par exemple α-méthytstyrène, β-méthylstyrène, p-méthylstyrène, tert-butylstyrène) les chlorostyrènes (par exemple monochlorostyrène, dichlorostyrène).

On préfère que la température de transition vitreuse (Tg, mesurée selon ASTM D3418) du copolymère TPS soit inférieure à - 20°C, plus préférentiellement inférieure à - 40°C. Une valeur de Tg supérieure à ces minima peut diminuer les performances de la couche étanche aux gaz et auto-obturante lors d'une utilisation à très basse température ; pour une telle utilisation, la Tg du copolymère TPS est plus préférentiellement encore inférieure à - 50°C.

La masse moléculaire moyenne en nombre (notée Mn) du copolymère TPS est préférentiellement comprise entre 30 000 et 500 000 g/mol, plus préférentiellement comprise entre 40 000 et 400 000 g/mol. En dessous des minima indiqués, la cohésion entre les chaînes de l'élastomère, notamment en raison de l'éventuelle dilution de ce dernier par une huile d'extension, risque d'être affectée. Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation de la composition dans un bandage pneumatique.

La masse moléculaire moyenne en nombre (Mn) du copolymère TPS est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) du copolymère TPS est de préférence inférieur à 3 ; plus préférentiellement Ip est inférieur à 2.

Le copolymère TPS et l'huile d'extension qui lui est associée, au taux minimal préconisé, peuvent constituer à eux seuls la couche élastomère étanche aux gaz et auto-obturante, ou bien être associés, dans la composition élastomère, à d'autres élastomères en quantité minoritaire relativement au copolymère TPS.

Si d'éventuels autres élastomères sont utilisés dans la composition, le copolymère TPS constitue l'élastomère majoritaire en poids. Son taux est alors préférentiellement supérieur à 70 pce, notamment compris dans un domaine de 80 à 100 pce (pour rappel, "pce" signifie parties en poids pour cent parties d'élastomère total, c'est-à-dire du total des élastomères présents dans la composition formant la couche étanche aux gaz). De tels élastomères complémentaires, minoritaires en poids, pourraient être par exemple des élastomères diéniques tels que du caoutchouc naturel ou un polyisoprène synthétique, un caoutchouc butyl ou des élastomères thermoplastiques autres que styréniques, dans la limite de la compatibilité de leurs microstructures.

De tels élastomères complémentaires, minoritaires en poids, pourraient être également d'autres élastomères thermoplastiques styréniques, qu'ils soient du type insaturés comme saturés (c'est-à-dire de manière connue, pourvus ou non d'insaturations éthyléniques ou doubles liaisons carbone-carbone).

A titre d'exemples d'élastomères TPS insaturés, on peut citer par exemple ceux comportant des blocs styrène et des blocs diène, en particulièrement ceux choisis dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

A titre d'exemples d'élastomères TPS saturés, on peut citer par exemple ceux choisis dans le groupe constitué par les copolymères blocs styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Toutefois, selon un mode de réalisation particulièrement préférentiel, la couche étanche aux gaz et auto-obturante est dépourvue de tels élastomères complémentaires ; en d'autres termes, le copolymère TPS, en particulier SIB ou SIBS, précédemment décrit est le seul élastomère thermoplastique et plus généralement le seul élastomère présent dans la composition élastomère de la couche étanche aux gaz.

Les copolymères à blocs polystyrène et polyisobutylène sont disponibles commercialement, ils peuvent être mis en oeuvre de façon classique pour des élastomères TPS, par extrusion ou moulage, par exemple à partir d'une matière première disponible sous la forme de billes ou de granulés. Ils sont vendus par exemple en ce qui concerne les SIB ou SIBS par la société KANEKA sous la dénomination "SIBSTAR" (e.g. "Sibstar 103T", "Sibstar 102T", "Sibstar 073T" ou "Sibstar 072T" pour les SIBS, "Sibstar 042D" pour les SIB). Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPE, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146).

Toutefois, à la connaissance des Demanderesses, aucun document de l'état de la technique ne décrit l'utilisation dans un objet pneumatique tel que notamment un bandage pneumatique, d'une composition élastomère comportant en combinaison un copolymère à blocs polystyrène et polyisobutylène et au moins 100 pce d'une huile d'extension, composition qui s'est révélée, de manière inattendue, non seulement apte à remplir une fonction de couche auto-obturante telle que décrite dans la demande WO 2008/080557 précitée, mais surtout et encore à concurrencer des compositions conventionnelles à base de caoutchouc butyl comme couche d'étanchéité dans des objets pneumatiques.

### I-1-B. Huile d'extension

Le deuxième constituant essentiel de la couche auto-obturante et étanche aux gaz est une huile d'extension (ou huile plastifiante), utilisée à un taux relativement élevé, égal ou supérieur à 100 pce.

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles. Plus préférentiellement, l'huile d'extension est choisie dans le groupe constitué par les huiles polybutène, les huiles paraffiniques et les mélanges de ces huiles.

On utilise tout particulièrement des huiles polybutène, préférentiellement des huiles polyisobutylène (en abrégé "PIB"), qui ont démontré le meilleur compromis de propriétés comparativement aux autres huiles testées, notamment à des huiles du type paraffiniques.

A titre d'exemples, des huiles polyisobutylène sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12"), par INEOS Oligomer sous la dénomination "Indopol H1200". Des huiles paraffiniques sont commercialisées par exemple par Exxon sous la dénomination "Telura 618" ou par Repsol sous la dénomination "Extensol 51".

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition qui serait néfaste aux propriétés auto-obturantes. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire Mn de l'huile d'extension est déterminée par SEC, l'échantillon étant préalablement solubilisé dans du tétrahydrofuranne à une concentration d'environ 1 g/l ; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche élastomère auto-obturante et étanche aux gaz de gonflage, notamment de l'objet pneumatique dans lequel elle est destinée à être utilisée.

Un avantage majeur et remarquable de la présente invention est que l'ajustement dans la formulation du taux d'huile d'extension, typiquement dans un domaine de 100 à 700 pce, permettra avantageusement, selon les conditions particulières d'usage qui sont visées, de privilégier plutôt les propriétés d'étanchéité (avec un taux plus faible d'huile d'extension) ou plutôt celles d'auto-obturation (avec un taux plus élevé d'huile d'extension).

De ce point de vue, pour un compromis optimal de propriétés, on préfère que le taux d'huile d'extension, en particulier d'huile polybutène, soit au moins égal à 120 pce, en particulier compris entre 120 et 700 pce ; plus préférentiellement, ce taux d'huile d"extension est au moins égal à 150 pce, en particulier compris dans un domaine de 150 à 500 pce. En dessous des minima indiqués, la couche élastomère risque de présenter une rigidité trop forte pour certaines applications tandis qu'au-delà du maximum préconisé, on s'expose à un risque de cohésion insuffisante de la composition et de perte d'étanchéité pouvant être néfaste selon l'application considérée.

La couche ou composition étanche aux gaz et auto-obturante précédemment décrite est un composé solide (à 23°C) et élastique, qui se caractérise notamment, grâce à sa formulation spécifique, par une très haute souplesse et très haute déformabilité.

Selon un mode de réalisation préférentiel de l'invention, cette couche ou composition élastomère présente un module sécant en extension, à 10% d'allongement, qui est inférieur à 2 MPa, plus préférentiellement inférieur à 1,5 MPa (notamment inférieur à 1 MPa). Cette grandeur est mesurée en première élongation (c'est-à-dire sans cycle d'accommodation) à une température de 23°C, avec une vitesse de traction de 500 mm/min (norme ASTM D412), et rapportée à la section initiale de l'éprouvette.

### I-1-C. Additifs divers

Les deux constituants précédemment décrits, à savoir copolymère TPS et huile d'extension sont suffisants à eux seuls pour que la composition auto-obturante et étanche aux gaz remplisse totalement ses fonctions d'étanchéité et anti-crevaison vis-à-vis des objets pneumatiques dans lesquels elle est utilisée.

Toutefois, divers autres additifs peuvent être ajoutés, comme par exemple des charges renforçantes telles que du noir de carbone ou de la silice, des charges non renforçantes ou inertes, des charges lamellaires améliorant encore l'étanchéité (e.g. phyllosilicates tels que kaolin, talc, mica, graphite, argiles ou argiles modifiées *("organo clays"),* des plastifiants autres que les huiles d'extension précitées, par exemple des résines tackifiantes, des agents de protection tels que antioxydants ou antiozonants, anti-UV, des agents colorants avantageusement utilisables pour la coloration de la composition, divers agents de mise en oeuvre ou autres stabilisants, ou encore des promoteurs aptes à favoriser l'adhésion au reste de la structure de l'objet pneumatique.

L'utilisation de charges lamellaires permet avantageusement de réduire encore le coefficient de perméabilité (donc d'augmenter l'étanchéité) de la composition élastomère thermoplastique, sans augmenter de façon excessive son module, ce qui permet de conserver la facilité d'intégration de la couche étanche dans l'objet pneumatique. De telles charges se présentent généralement sous forme de plaques, plaquettes, feuilles ou feuillets empilés, avec une anisométrie plus ou moins marquée, dont la longueur moyenne est par exemple comprise entre quelques µm et quelques centaines de µm. Elles peuvent être utilisées à des taux pondéraux variables selon les applications, par exemple entre 20 et 150 pce.

Outre les élastomères précédemment décrits, cette composition étanche pourrait aussi comporter, toujours selon une fraction pondérale minoritaire par rapport au copolymère TPS, des polymères autres que des élastomères, tels que par exemple des polymères thermoplastiques compatibles avec les élastomères TPS.

### I-2. Utilisation de la couche étanche à l'air et auto-obturante dans un objet pneumatique

La composition précédemment décrite est utilisable comme couche étanche à l'air et auto-obturante dans tout type d'objet pneumatique. A titre d'exemples de tels objets pneumatiques, on peut citer les bateaux pneumatiques, les ballons ou balles utilisées pour le jeu ou le sport.

Elle est particulièrement bien adaptée à une utilisation dans un objet pneumatique, produit fini ou semi-fini, en caoutchouc, tout particulièrement dans un bandage pneumatique pour véhicule automobile tel qu'un véhicule de type deux roues, tourisme ou industriel.

Une telle couche auto-obturante et étanche aux gaz de gonflage est préférentiellement disposée sur la paroi interne de l'objet pneumatique, mais elle peut être également intégrée complètement à sa structure interne.

L'épaisseur de la cette couche est préférentiellement supérieure à 0,2 mm, plus préférentiellement comprise entre 0,3 et 30 mm, notamment entre 0,5 et 20 mm.

On comprendra aisément que, selon les domaines d'application spécifiques, les dimensions et les pressions en jeu, le mode de mise en oeuvre de l'invention peut varier, la couche étanche aux gaz et auto-obturante comportant alors plusieurs gammes d'épaisseur préférentielles.

Ainsi par exemple, pour des bandages pneumatiques de type pour véhicule tourisme ou deux roues, elle peut avoir une épaisseur d'au moins 0,5 mm, préférentiellement comprise entre 1 et 4 mm. Selon un autre exemple, pour des bandages pneumatiques de véhicules poids-lourd ou agricole, l'épaisseur préférentielle peut se situer entre 2 et 20 mm. Selon un autre exemple, pour des bandages pneumatiques de véhicules dans le domaine du génie civil ou pour avions, l'épaisseur préférentielle peut se situer entre 4 et 30 mm.

Comparativement à une couche usuelle à base de caoutchouc butyl, la composition étanche à l'air et auto-obturante décrite ci-dessus a l'avantage de présenter une hystérèse nettement plus faible, et donc d'offrir une résistance au roulement réduite aux bandages pneumatiques, comme cela est démontré dans les exemples de réalisation qui suivent.

### II. EXEMPLES DE REALISATION DE L'INVENTION

La couche élastomère auto-obturante et étanche aux gaz de gonflage précédemment décrite est utilisable avantageusement dans les bandages pneumatiques de tous types de véhicules, en particulier véhicules tourisme ou véhicules industriels tels que poids-lourd.

A titre d'exemple, la figure unique annexée représente de manière très schématique (sans respect d'une échelle spécifique), une coupe radiale d'un bandage pneumatique conforme à l'invention, destiné par exemple à un véhicule tourisme.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 auto-obturante et étanche à l'air, par exemple d'épaisseur égale à environ 4 mm, du côté de la cavité interne 11 du bandage pneumatique 1. Cette couche interne (ou *"inner liner"*) couvre toute la paroi interne du bandage pneumatique, se prolongeant d'un flanc à l'autre, au moins jusqu'au niveau du crochet de jante lorsque le bandage pneumatique est en position montée.

Selon cet exemple particulier, la couche 10 ci-dessus est une couche d'élastomère thermoplastique SIBS ("Sibstar 102T" avec un taux de styrène d'environ 15%, une Tg d'environ - 65°C et une masse Mn d'environ 90 000 g/mol) étendu avec 150 pce d'huile PIB ("Indopol H1200" avec une masse Mn d'environ 2 100 g/mol).

La première fonction de la couche 10 est d'assurer une protection efficace contre les pertes de pression dues aux perforations accidentelles, en permettant l'obturation automatique de ces perforations. Si un corps étranger tel qu'un clou traverse la structure de l'objet pneumatique, par exemple une paroi telle qu'un flanc 3 ou le sommet 6 du bandage pneumatique 1, la composition servant de couche auto-obturante subit plusieurs contraintes. En réaction à ces contraintes, et grâce à ses propriétés avantageuses de déformabilité et d'élasticité, ladite composition crée une zone de contact étanche tout autour du corps. Peu importe que le contour ou profil de ce dernier soit uniforme ou régulier, la souplesse de la composition auto-obturante permet à cette dernière de s'immiscer dans des ouvertures de taille minime. Cette interaction entre la composition auto-obturante et le corps étranger confère une étanchéité à la zone affectée par ce dernier.

En cas de retrait, accidentel ou volontaire, du corps étranger, une perforation reste : celle-ci est susceptible de créer une fuite plus ou moins importante, en fonction de sa taille. La composition auto-obturante, soumise à l'effet de la pression hydrostatique, est suffisamment souple et déformable pour obturer, en se déformant, la perforation, empêchant la fuite de gaz de gonflage. Dans le cas d'un bandage pneumatique notamment, il s'est avéré que la souplesse de la composition auto-obturante permettait de supporter sans problème les efforts des parois environnantes, même lors des phases de déformations du bandage pneumatique chargé et en roulage.

La deuxième fonction de cette même couche 10 est d'assurer l'étanchéité et de protéger l'armature de carcasse de la diffusion d'air provenant de l'espace 11 intérieur au bandage. Elle permet le gonflement et le maintien sous pression du bandage pneumatique ; ses propriétés d'étanchéité doivent lui permettre de garantir un taux de perte de pression relativement faible, de maintenir le bandage gonflé, en état de fonctionnement normal, pendant une durée suffisante, normalement de plusieurs semaines ou plusieurs mois.

Le pneumatique pourvu de sa couche élastomère auto-obturante et étanche à l'air (10) tel que décrit ci-dessus peut être réalisé avant ou après vulcanisation (ou cuisson).

Dans le premier cas (i.e., avant cuisson du bandage pneumatique), cette couche élastomère est simplement appliquée de façon conventionnelle à l'endroit souhaité, pour formation de la couche 10. La vulcanisation est ensuite effectuée classiquement. Une variante de fabrication avantageuse, pour l'homme du métier des bandages pneumatiques, consistera par exemple au cours d'une première étape, à déposer à plat la couche élastomère directement sur un tambour de confection, sous la forme d'une couche d'épaisseur adaptée, avant de recouvrir cette dernière avec le reste de la structure du bandage pneumatique, selon des techniques de fabrication bien connues de l'homme du métier.

Dans le second cas (i.e., après cuisson du bandage pneumatique), la couche élastomère est appliquée à l'intérieur du bandage pneumatique cuit par tout moyen approprié, par exemple par collage, par extrusion, par pulvérisation ou encore par extrusion/ soufflage d'un film d'épaisseur appropriée.

Des bandages pneumatiques conformes à l'invention, du type pour véhicule tourisme (dimensions 195/65 R15), ont été fabriqués ; leur paroi interne a été recouverte par une couche étanche aux gaz et auto-obturante (10) d'une épaisseur de 4 mm (sur tambour de confection, avant fabrication du reste du pneumatique), puis les pneumatiques vulcanisés. La dite couche (10) était formée du SIBS étendu avec 150 pce d'huile PIB, telle que décrite supra.

Lors d'essais, ces bandages pneumatiques pourvus de la couche 10 ci-dessus ont d'abord été testés comme décrit dans la demande WO 2008/080557 précitée, pour évaluer les propriétés auto-obturantes de la couche 10. Après avoir perforé la bande de roulement et le bloc sommet au moyen de poinçons de diamètre 6 mm, puis retiré ces poinçons, on a constaté que les bandages pneumatiques de l'invention donnaient des performances sensiblement équivalentes à celles connues de la demande WO 2008/080557, à savoir que ces bandages ainsi perforés résistaient malgré tout à un roulage soutenu à haute vitesse (130 km/h) sans perte de pression, ceci pendant plusieurs milliers de kilomètres.

Les propriétés d'étanchéité ont été ensuite analysées sur des éprouvettes de compositions à base de caoutchouc butyl d'une part (épaisseur 1 mm), de SIBS et huile d'extension (150 pce) d'autre part pour la couche étanche et auto-obturante (épaisseur 4 mm) ; bien entendu, la fonction auto-obturante de cette dernière couche exige d'utiliser des épaisseurs notablement supérieures à celles des couches usuelles d'étanchéité.

Pour cette analyse, on a utilisé un perméamètre à parois rigides, placé dans une étuve (température de 60°C dans le cas présent), muni d'un capteur de pression (étalonné dans le domaine de 0 à 6 bars) et relié à un tube équipé d'une valve de gonflage. Le perméamètre peut recevoir des éprouvettes standard sous forme de disque (par exemple de diamètre 65 mm dans le cas présent) et d'épaisseur uniforme pouvant aller jusqu'à 3 mm (0,5 mm dans le cas présent). Le capteur de pression est connecté à une carte d'acquisition de données *National Instruments* (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire (moyenne sur 1000 points) donnant la pente α de la perte de pression, à travers l'éprouvette testée, en fonction du temps, après stabilisation du système, c'est-à-dire obtention d'un régime stable au cours duquel la pression décroît linéairement en fonction du temps.

On a constaté tout d'abord que la couche de SIBS ainsi étendu présentait finalement une étanchéité identique à celle de la couche butyl conventionnelle, la pénalisation apportée par l'huile d'extension étant en fait totalement compensée par l'augmentation d'épaisseur de la couche de SIBS, par ailleurs indispensable à la fonction auto-obturante.

On a noté en outre que le coefficient de perméabilité de la couche de SISB était nettement moins dégradé (augmenté d'environ 50% au lieu de 125%) en présence d'une huile PIB ("Dynapak Poly 190") que d'une huile conventionnelle telle que paraffinique ("Telura 618"). C'est en cela que la combinaison du copolymère TPS tel que SIB ou SIBS, et d'huile PIB s'est révélée offrir le meilleur compromis de propriétés pour la couche auto-obturante et étanche aux gaz.

Enfin, les bandages pneumatiques de l'invention ont été comparés à des bandages témoins (marque Michelin "Energy 3") comportant une couche étanche à l'air conventionnelle, de même épaisseur, à base de caoutchouc butyl. La résistance au roulement des bandages pneumatiques a été mesurée sur un volant, selon la méthode ISO 87-67 (1992).

On a constaté que les bandages pneumatiques de l'invention présentaient une résistance au roulement réduite de manière très significative et inattendue pour l'homme du métier, de près de 4% par rapport aux bandages pneumatiques témoins.

En conclusion, une composition élastomère comportant en combinaison un copolymère à blocs polystyrène et polyisobutylène et au moins 100 pce d'une huile d'extension, s'est révélée de manière inattendue non seulement apte à remplir la fonction d'une couche auto-obturante telle que décrite notamment dans la demande WO 2008/080557 précitée, mais encore et surtout apte à remplacer une composition conventionnelle à base de caoutchouc butyl comme couche d'étanchéité dans des bandages pneumatiques, avec à la clef l'opportunité de réduire l'hystérèse de ces bandages de manière sensible, et donc la consommation de carburant des véhicules automobiles équipés de tels bandages.

## Revendications

1. Objet pneumatique pourvu d'une couche élastomère auto-obturante et étanche aux gaz de gonflage, **caractérisé en ce que** ladite couche élastomère comporte au moins, à titre d'élastomère majoritaire, un copolymère thermoplastique à blocs polystyrène et polyisobutylène, et au moins 100 pce d'une huile d'extension.

2. Objet pneumatique selon la revendication 1, dans lequel le copolymère thermoplastique est choisi dans le groupe constitué par les copolymères styrène/ isobutylène, les copolymères styrène/ isobutylène/ styrène et les mélanges de ces copolymères.

3. Objet pneumatique selon la revendication 2, dans lequel le copolymère thermoplastique est un copolymère styrène/ isobutylène/ styrène.

4. Objet pneumatique selon l'une quelconque des revendications 1 à 3, dans lequel le copolymère thermoplastique comprend entre 5 et 50% en masse de styrène.

5. Objet pneumatique selon l'une quelconque des revendications 1 à 4, dans lequel la température de transition vitreuse du copolymère thermoplastique est inférieure à - 20°C.

6. Objet pneumatique selon l'une quelconque des revendications 1 à 5, dans lequel la masse moléculaire moyenne en nombre du copolymère thermoplastique est comprise entre 30 000 et 500 000 g/mol.

7. Objet pneumatique selon l'une quelconque des revendications 1 à 6, dans lequel l'huile d'extension est choisie dans le groupe constitué par les huiles polyoléfiniques, les huiles paraffiniques, les huiles naphténiques, les huiles aromatiques, les huiles minérales, et les mélanges de ces huiles.

8. Objet pneumatique selon la revendication 7, dans lequel l'huile d'extension est choisie dans le groupe constitué par les polybutènes, de préférence une huile polyisobutylène.

9. Objet pneumatique selon l'une quelconque des revendications 1 à 8, dans lequel la masse moléculaire moyenne en nombre de l'huile d'extension est comprise entre 200 et 25 000 g/mol.

10. Objet pneumatique selon l'une quelconque des revendications 1 à 9, dans lequel le taux d'huile d'extension est au moins égal à 120 pce, de préférence au moins égal à 150 pce.

11. Objet pneumatique selon l'une quelconque des revendications 1 à 10, dans lequel la couche élastomère a une épaisseur supérieure à 0,2 mm, de préférence comprise entre 0,3 mm et 30 mm.

12. Objet pneumatique selon l'une quelconque des revendications 1 à 11, dans lequel la couche élastomère est disposée sur la paroi interne de l'objet pneumatique.

13. Objet pneumatique selon l'une quelconque des revendications 1 à 12, **caractérisé en ce que** ledit objet est un bandage pneumatique.

14. Objet pneumatique selon l'une quelconque des revendications 1 à 12, **caractérisé en ce que** ledit objet pneumatique est une chambre à air.

15. Utilisation comme couche auto-obturante et étanche aux gaz, dans un objet pneumatique, d'un copolymère thermoplastique à blocs polystyrène et polyisobutylène et d'au moins 100 pce d'une huile d'extension.

## Claims

1. Inflatable article equipped with a self-sealing elastomer layer impermeable to inflation gases, **characterized in that** said elastomer layer comprises at least, as major elastomer, a thermoplastic polystyrene/polyisobutylene block copolymer and at least 100 phr of an extender oil.

2. Inflatable article according to Claim 1, in which the thermoplastic copolymer is chosen from the group consisting of styrene/isobutylene copolymers, styrene/isobutylene/styrene copolymers and blends of these copolymers.

3. Inflatable article according to Claim 2, in which the thermoplastic copolymer is a styrene/isobutylene/styrene copolymer.

4. Inflatable article according to any one of Claims 1 to 3, in which the thermoplastic copolymer comprises between 5 and 50% by weight of styrene.

5. Inflatable article according to any one of Claims 1 to 4, in which the glass transition temperature of the thermoplastic copolymer is less than -20°C.

6. Inflatable article according to any one of Claims 1 to 5, in which the number-average molecular weight of the thermoplastic copolymer is between 30 000 and 500 000 g/mol.

7. Inflatable article according to any one of Claims 1 to 6, in which the extender oil is chosen from the group composed of polyolefin oils, paraffinic oils, naphthenic oils, aromatic oils, mineral oils, and mixes of these oils.

8. Inflatable article according to Claim 7, in which the extender oil is chosen from the group composed of polybutene oils, preferably a polyisobutylene oil.

9. Inflatable article according to any one of Claims 1 to 8, in which the number-average molecular weight of the extender oil is between 200 and 25 000 g/mol.

10. Inflatable article according to any one of Claims 1 to 9, in which the content of extender oil is at least equal to 120 phr, preferably at least equal to 150 phr.

11. Inflatable article according to any one of Claims 1 to 10, in which the elastomer layer has a thickness greater than 0.2 mm, preferably between 0.3 and 30 mm.

12. Inflatable article according to any one of Claims 1 to 11, in which the elastomer layer is positioned on the inner wall of the inflatable article.

13. Inflatable article according to any one of Claims 1 to 12, **characterized in that** said article is a pneumatic tyre.

14. Inflatable article according to any one of Claims 1 to 12, **characterized in that** said inflatable article is an inner tube.

15. Use as self-sealing, gastight layer, in an inflatable article, of a thermoplastic polystyrene/polyisobutylene block copolymer and of at least 100 phr of an extender oil.

## Patentansprüche

1. Pneumatisches Objekt, das mit einer selbstversiegelnden und aufpumpgasdichten Elastomerschicht versehen ist, **dadurch gekennzeichnet, dass** die Elastomerschicht mindestens als überwiegendes Elastomer ein thermoplastisches Copolymer mit Polystyrol- und Polyisobutylenblöcken und mindestens 100 phe eines Strecköls umfasst.

2. Pneumatisches Objekt nach Anspruch 1, wobei das thermoplastische Copolymer aus der Gruppe bestehend aus Styrol/Isobutylen-Copolymeren, Styrol/Isobutylen/Styrol-Copolymeren und Mischungen dieser Copolymere ausgewählt ist.

3. Pneumatisches Objekt nach Anspruch 2, wobei es sich bei dem thermoplastischen Copolymer um ein Styrol/Isobutylen/Styrol-Copolymer handelt.

4. Pneumatisches Objekt nach einem der Ansprüche 1 bis 3, wobei das thermoplastische Copolymer zwischen 5 und 50 Gew.-% Styrol umfasst.

5. Pneumatisches Objekt nach einem der Ansprüche 1 bis 4, wobei die Glasübergangstemperatur des thermoplastischen Copolymers weniger als -20°C beträgt.

6. Pneumatisches Objekt nach einem der Ansprüche 1 bis 5, wobei das zahlenmittlere Molekulargewicht des thermoplastischen Copolymers zwischen 30.000 und 500.000 g/mol liegt.

7. Pneumatisches Objekt nach einem der Ansprüche 1 bis 6, wobei das Strecköl aus der Gruppe bestehend aus Polyolefinölen, Paraffinölen, naphthenischen Ölen, aromatischen Ölen, Mineralölen und Mischungen dieser Öle ausgewählt ist.

8. Pneumatisches Objekt nach Anspruch 7, wobei es sich bei dem Strecköl um ein Polybutenöl, vorzugsweise ein Polyisobutylenöl, handelt.

9. Pneumatisches Objekt nach einem der Ansprüche 1 bis 8, wobei das zahlenmittlere Molekulargewicht des Strecköls zwischen 200 und 25.000 g/mol liegt.

10. Pneumatisches Objekt nach einem der Ansprüche 1 bis 9, wobei der Streckölgehalt mindestens gleich 120 phe, vorzugsweise mindestens gleich 150 phe, ist.

11. Pneumatisches Objekt nach einem der Ansprüche 1 bis 10, wobei die Elastomerschicht eine Dicke von mehr als 0,2 mm, vorzugsweise zwischen 0,3 mm und 30 mm, aufweist.

12. Pneumatisches Objekt nach einem der Ansprüche 1 bis 11, wobei die Elastomerschicht auf der Innenwand des pneumatischen Objekts angeordnet ist.

13. Pneumatisches Objekt nach einem der Ansprüche 1 bis 12, **dadurch gekennzeichnet, dass** es sich bei dem Objekt um einen Luftreifen handelt.

14. Pneumatisches Objekt nach einem der Ansprüche 1 bis 12, **dadurch gekennzeichnet, dass** es sich bei dem pneumatischen Objekt um einen Luftschlauch handelt.

15. Verwendung von einem thermoplastischen Copolymer mit Polystyrol- und Polyisobutylenblöcken und mindestens 100 phe eines Strecköls als selbstversiegelnde und aufpumpgasdichte Schicht in einem pneumatischen Objekt.
